# EUROPEAN PATENT SPECIFICATION

(11) **EP 1 117 947 B1**
(45) Date of publication and mention of the grant of the patent: **21.01.2004**
(21) Application number: 98949684.9
(22) Date of filing: 29.09.1998
(51) Int. Cl.: F16G 1/28

(54) **SYNCHRONOUS DRIVE BELT WITH SCAFFOLD STRETCH FABRIC**
ZAHNTREIBRIEMEN MIT ELASTISCHEM GEWEBE
COURROIE D'ENTRAINEMENT SYNCHRONE COMPRENANT UN TISSU EXTENSIBLE A STRUCTURE EN ECHAFAUDAGE

(43) Date of publication of application: 25.07.2001
(73) Proprietor: THE GOODYEAR TIRE & RUBBER COMPANY, Akron, Ohio 44316-0001 (US)
(72) Inventor: MORRIS, Matthew, Thomas, Lincoln, NE 68521 (US); CHIEN, Wei, Willie, River Edge, NJ 07661 (US)
(74) Representative: Kutsch, Bernd
(86) International application number: PCT/US1998/020601
(87) International publication number: WO 2000/019123

(56) References cited:
- EP-A- 0 637 704
- US-A- 4 108 011
- US-A- 4 690 664
- US-A- 5 209 705
- US-A- 5 501 643
- US-A- 5 545 097
- US-A- 5 609 541
- US-A- 5 645 504
- US-A- 5 733 399

## Description

### Technical Field

The present invention relates to a synchronous drive belt designed for improved tooth formation. More specifically, the present invention is directed toward a fabric covering layer for the synchronous drive belt for improved tooth formation.

### Background Art

Conventional synchronous drive belts have teeth placed at right angles to the belt mid-circumferential line. Such belts are well illustrated in U.S. Pat. Nos. 4,108,011 and 4,690,664. In these known prior art belts, the whole tooth engages with a corresponding pulley cavity at the same time.

U.S. Pat. No. 5,209,705 discloses a synchronous drive belt with at least two transversely adjacent rows of teeth, having centerlines, uniformly spaced apart in the longitudinal direction by a pitch length and extending obliquely to the longitudinal directional. The teeth in the transversely adjacent rows are at oppositely balanced angles and the centerlines of said adjacent teeth are offset from each other by a distance of from 10% to 90% of the pitch length. Such belts are known in shorthand terminology as helical-offset-tooth belts or HOT belts.

Prior art conventional belts and helical-offset-tooth belts of U.S. Pat No. 5,209,705, for the purpose of wear resistance, are provided a stretchable fabric material on the outer surface of the belt teeth. Known abrasion resistance fabrics employed in the art are cotton, cotton-nylon blend, nylon, aramid, aramid-rayon blend, acrylic, acrylic-rayon blend, polyester, polyester-cotton blend and rayon. The selected fabric preferably has a thermal stability up to at least 500° F(260°C)

U.S. Pat. No. 5,645,504 discloses the use of a knitted fabric with a 1x1-rib construction for use in conventional synchronous belts of the first type previously described. The selected fabric has a pleated structure allowing stretch in a direction transverse to the knitted ribs. The fabric is stretched, in use, from about 15% to about 200%. During formation of the belt, the ribs of the fabric are oriented to extend transverse to the belt direction and aligned with the teeth.

U.S. Pat. No. 5,545,097 discloses a tire belt with a resorcinol-formalin-latex (RFL) solution treated facing fabric. The facing fabric is a woven fabric with the warp threads running transverse to the belt direction, aligned with the teeth, and the weft threads running in a lengthwise direction. The fabric is plain weave, twill weave, satin weave or the like. The fabric is initially shrunk to about fifty percent of the original width, immersed in RFL solution, squeezed, and then dried. If necessary the fabric may by dipped in RFL again to obtain a desired 30-50% solid RFL attachment to the fabric.

U.S. Pat. 5,609,541 discloses a tooth facing fabric treated with a rubber composition in which hydrogenated acrylonitrile-butadiene rubber is mixed with N,N'-m-phenylenedimaleimide.

Single directional scaffold construction fabric, permitting stretch in the single direction, has also been employed as abrasion resistant fabric in synchronous belt constructions, as disclosed in U. S . Patent 5, 501, 643.

While all the prior art fabrics provide acceptable abrasion resistance for conventional belts with transversely extending teeth, greater tooth profiling can be achieved by use of a bi-directional stretch fabric as further disclosed in the present invention. Such a fabric is especially suited for belts of the type disclosed in U.S. Pat. No. 5,209,705.

For the inclined centerline teeth of the HOT belt, the surface face of the teeth varies in both the transverse and longitudinal direction of the belt. When a single directional stretch fabric is laid with the weft threads parallel to the longitudinal of the belt, no consideration is provided for the variation of the belt surface in the transverse direction. The inventive use of a bi-directional fabric as disclosed herein provides for surface variation in both directions, and enables better tooth profiling. The inventive aspect of the disclosed invention is also applicable to non-inclined teeth for synchronous drive belts.

### Summary of the Invention

The present invention is directed toward improved tooth formation in belting. The disclosed invention is applicable in tooth formation of conventional straight toothed belts and helically-offset tooth belts.

The disclosed fabric is stretchable in both directions, and may have greater stretch characteristics in one direction than in the opposing direction.

The disclosed invention is obtained by providing the belting with an outer tooth reinforcement layer of a woven bi-directional stretch fabric. The woven fabric, comprising warp and weft threads, is of a scaffold construction.

Each warp and weft thread of the bi-directional stretch fabric is provided with a core yarn about which is helically wrapped at least one yarn, permitting relative movement of the core yarn within the wrap of the second yarn.

### Brief Description of Drawings

The invention will be described by way of example and with reference to the accompanying drawings in which:
FIG. 1 is a cross-sectional view of one embodiment of the disclosed belting;
FIG. 2 illustrates the disclosed fabric.

### Detailed Description of the Invention

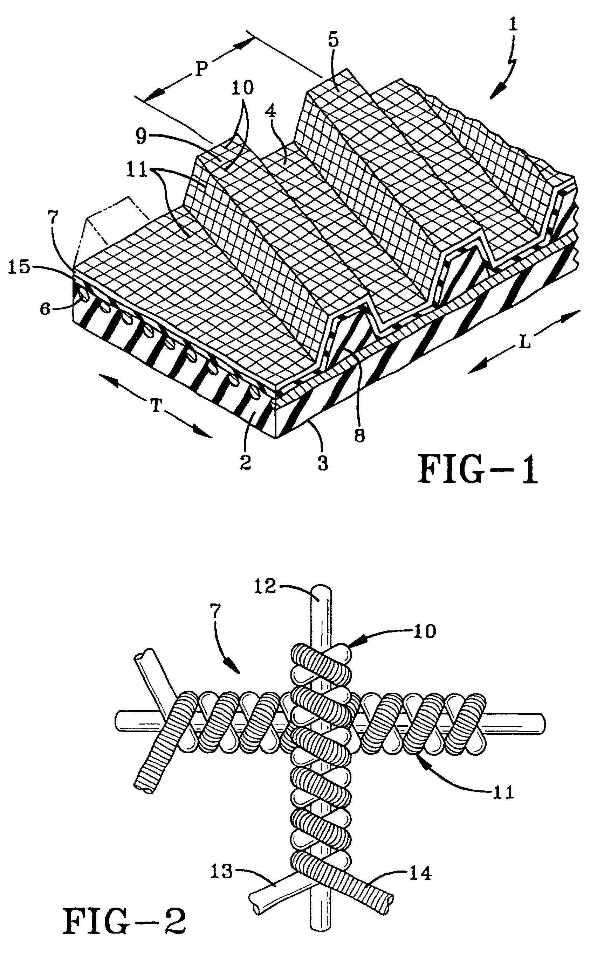

As illustrated in FIG. 1, the power belt 1 has a belt body 2, with an inner surface 3, and an outer facing toothed surface 4. The outer facing surface 4 has at least one row of adjacent rows of teeth 5. The belt body 2 is made of a resilient elastomer and preferably reinforced with longitudinal tensile members 6 which lie along the belt longitudinal direction L. The inner surface 3 of the belt I may also be formed with teeth 5, forming a dual sided belting.

The elastomer for the belt body 2 may be any one of those known to be suitable for use in such belts, e.g., polychloroprene, polyurethane, BBR, IIR, IR, SBR, CSM, EPDM, other thermosets, thermoplastic elastomers and other polymer alloys. The tensile reinforcing members 6 are usually made of a plurality of cords of a high elastic modulus. These cords may be made from glass fiber, carbon fiber, steel, polyester, high tenacity rayon or preferably, polyaramide. If the belt is to be used for automotive applications, the tensile members are typically made using glass fibers.

The illustrated teeth 5 are uniformly spaced apart in the longitudinal direction L by a pitch length P, the pitch length P extending from one tooth centerline to the adjacent tooth centerline. The teeth 5 may extend obliquely to the longitudinal direction L. When the teeth 5 are so inclined the oblique inclination angle of the teeth ranges from 15° to 45°.

The belt surface 4 may be defined by several adjacent rows of teeth 5. When the belt 1 is defined by plural rows of adjacent teeth, the centerlines of the transversely adjacent teeth 5 are offset from each other by a distance of 10% to 90% of the pitch length P. Additionally, if the adjacent rows of teeth 5 are obliquely inclined, the teeth 5 in the transverse adjacent rows are at oppositely balanced angles. This belt configuration is referred to as helically-offset-tooth (HOT) design, and is disclosed in U.S. Pat. No. 5,209,705.

The outer toothed surface 4 is reinforced with an abrasion resistance fabric 7. The fabric 7 is defined by warp 10 and weft 11 yarns. The warp yarns 10 extend in the transverse direction T while the weft yarns 11 extend in the longitudinal direction L.

FIG. 2 is illustrative of the fabric construction used for the inventive belt. The fabric 7 is a bi-directional stretch material, with a scaffold construction. Each warp 10 and weft 11 yarn is a composite yarn comprised of a core yarn 12 around which is wound at least one other yarn 13 or 14. Illustrated is a second yarn 13 wrapped around the core yarn 12, which in turn is wrapped by a third yarn 14. When both the second yarn 13 and the third yarn 14 are used in the fabric 7, the second yarn 13 is wound in one direction about the core yarn 12, while the third yarn 14 is wound over the second yarn 13 in the reverse direction. When only one yarn 13 or 14 is employed, the yarn 13 or 14 may be wrapped in either direction.

The composite structure of both the warp 10 and weft 11 yarns enable the material to stretch in both directions. In constructing the fabric 7, each warp 10 and weft 11 yarn may be provided with only a single outer yarn 13 or 14. In such a construction, the fabric 7 will exhibit the same stretch characteristics in both directions. If the fabric 7 is constructed with second yarns 13 and third yarns 14 on both the warp 10 and weft 11 threads, similarly, the fabric 7 will exhibit the same stretch characteristics in both directions. If so desired by the tooth inclination angle, wherein it is desired to have stretch characteristics in one direction greater than in the opposing direction, the fabric 7 may be formed with either the warp 10 or weft 11 yarn provided with both second 13 and third 14 yarns while the other yarn 10 or 11 is provided with only a single wrapped yarn 13 or 14.

The yarns of the fabric 7 are selected from among those known and conventional in the art. Examples of such suitable yards are nylon (all types), nylon-rayon blend, aramid, aramid-rayon blend, aramid-nomex, acrylic, acrylic-rayon blend, polyester, cotton-polyester blend, rayon, cotton, and cotton-rayon blend. The yarns employed in this invention can be either filaments or second yarns produced in the conventional manner. The resulting scaffolding material 7 can be a combination of filament and second yarns, the selection depending upon the desired abrasion characteristics and/or cost of the material. Preferred materials, for illustrative purposes only, are spandex for the core yarn 12 and nylon for the outer second 13 and/or third 14 yarns.

In preparation of the fabric 7, the cut fabric 7 is dipped in conventional resorcinol-formaldehyde-latex (RFL) solution and allowed to cure. The formulation of the RFL solution is selected, in accordance with conventional techniques in the art, to be compatible with the elastomer selected for the body of the belt. The dipping and subsequent curing are accomplished without any additional stretching of the fabric 7.

During belt manufacturing, for example in accordance with the methods disclosed in U.S. Pat. No. 5,733,399, the cured, unstretched bi-directional stretch fabric 7 is laid onto the mold, and at some point in the manufacturing process, the fabric 7 is pressed into the mold to form the outer surface of the belt teeth. Due to the bi-directional stretch of the fabric 7, easy deformation and reshaping of the fabric 7 permit any desired tooth configuration. When manufacturing HOT belts greater inclination angles for the teeth 5 can be achieved while maintaining the desired tooth profiling.

The fabric 7 also exhibits greater abrasion resistance for synchronous belts than conventional materials, such as a conventional bi-directional stretch fabric and square woven fabric. Belts 1 formed with the bi-directional scaffold stretch fabric 7 also have a greater belt life than belts formed with conventional knitted fabrics or conventional bi-directional stretch fabrics.

Due to the elastic nature of the disclosed fabric 7, stretching and deformation of the fabric 7 during molding creates interstices 9 between the warp 10 and weft 11 threads. The interstices vary in size, depending upon the location of the interstice relative to the mold shape. If the interstice is relatively large, the tooth stock 5 may flow into and beyond the fabric 7, known as rubber strikethrough. The rubber strikethrough is partly dependent upon differing cure rates and viscosities of the body stock 2 and tooth stock 8. For large sized belts, such as used in industrial applications, the rubber strikethrough is desired and the rubber forms the outer surface of the belting, as opposed to the fabric forming the outer surface.

For automotive or other transportation applications wherein the manufactured belt is of a comparatively smaller size, the fabric 7 forms the outer surface of the tooth and strikethrough needs to be minimized. To prevent rubber strikethrough a barrier layer 15 is placed between the tooth stock 8 and the fabric 7. The barrier layer 15, when applied during construction of the belt, is an uncured rubber compound. An effective barrier will prevent the tooth stock 8 from flowing into the interstices of the facing fabric 7. To achieve this an important property of the barrier compound is the cure rate. The cure rate of the barrier layer 15 must be faster than the cure rate of the tooth stock 8 or any other rubber in the belt 1. Preferably, the barrier compound exhibits a 10% elastic modulus in the range of 550 - 950 psi.

## Claims

1. drive belt (1), the belt (1) being comprised of at least one row of transversely extending teeth (5), and a fabric layer (7) reinforcing the outer surface of the teeth (4), the belt (1) being **characterized by**:
the fabric (7) being a woven bi-directional stretch fabric (7) comprising warp (10) and weft (11) yarns;
each warp (10) and weft (11) yarn comprising a first core yarn (12) with at least one second yarn (13) wound about the core yarn (12).

2. A drive belt (1) in accordance with claim 1 wherein either the warp (10) or weft (11) yarn comprise a further third yarn (14) wrapped around the second yarn (13) and the core yarn (12).

3. A drive belt (1) in accordance with claim 2 wherein the third yarn (14) is wound about the second yarn (13) in a direction opposite the second yarn (13).

4. A drive belt (1) in accordance with claim 1 wherein the modulus of elasticity of the core yarn (12) is greater than the modulus of elasticity of the second yarn (13).

5. A drive belt (1) in accordance with claim 2 wherein the modulus of elasticity of the first core yarn (12) is greater than the modulus of elasticity of the third yarn (14).

6. A drive belt (1) in accordance with claim 1 wherein the modulus of elasticity of the first core yarn (12) is greater than the modulus of elasticity of the second yarn (13) or the third yarn (14).

7. drive belt (1) in accordance with claim 1 wherein the belt (1) comprises a barrier layer (15) located adjacent to the fabric layer (7), wherein
the barrier layer (15) is an elastomeric compound, and has a cure rate faster than any other elastomer in the belt (1).

8. A drive belt (1) in accordance with claim 7 wherein the barrier layer (15) has a 10% elastic modulus of 3,8-6,6 MPa (550-950 psi).

9. A drive belt (1) in accordance with claim 1 wherein the teeth (5) on the outer surface of the belt (1) extend obliquely in the longitudinal direction (L) of the belt (1).

10. A synchronous drive belt (1) comprised of a resilient elastomer, reinforced with one or more reinforcing members (6) extending along and thereby defining a pitch line, with at least two transversely adjacent rows of teeth (5) having centerlines uniformly spaced apart in the longitudinal direction (L) by their pitch length (P) and extending obliquely to the longitudinal direction (L) such that the teeth (5) in the transversely adjacent rows are at oppositely balanced angles and the centerlines of the adjacent teeth (5) are offset from each other by a distance of from 10% to 90% of the pitch length P, and a fabric layer (7) having woven warp (10) and weft (11) yarns reinforcing the outer surface of the teeth (4), the belt (1) **characterized by** the fabric layer (7) is a woven bi-directional stretch fabric (7).

11. The synchronous drive belt (1) according to claim 10 wherein the woven bi-directional stretch fabric (7) has a two-way scaffold construction.

12. The synchronous drive belt (1) according to claim 10 wherein the yarns (12, 13, or 14) of the fabric (7) are selected from the group consisting of nylon, nylon-rayon blend, aramid, aramid-rayon blend, aramid-nomex, acrylic, acrylic-rayon blend, polyester, cotton-polyester blend, rayon, cotton, and cotton-rayon blend.

13. A method of forming a drive belt (1) for industrial application comprising providing a resilient elastomer belt (1) body, forming at least one row of transversely extending teeth (5), and reinforcing the teeth (5) with an abrasion fabric (7), the method **characterized by**:
forming the abrasion fabric (7) from a woven bi-directional stretch fabric (7) comprising weft (11) and warp (10) yarns, each warp (10) and weft (11) yarn comprising a first core yarn (12) with at least one second yarn (13) wound about the core yarn (12).

14. A method of forming a drive belt (1) in accordance with claim 13 wherein the either the weft (11) and warp (10) yarns comprise a further third yarn (14) wrapped around the second yarn (13).

15. A method of forming a drive belt (1) in accordance with claim 14 wherein the core yarn (12) of the weft (11) and warp (10) yarns has a modulus of elasticity greater than the modulus of elasticity of the second and third yarns (13 or 14).

16. A method of forming a synchronous drive belt (1) comprising providing a resilient elastomer, reinforced with one or more reinforcing members (6) extending along and thereby defining a pitch line, with at least two transversely adjacent rows of teeth (5) having centerlines uniformly spaced apart in the longitudinal direction (L) by their pitch length (P) and extending obliquely to the longitudinal direction (L) such that the teeth (5) in the transversely adjacent rows are at oppositely balanced angles and the centerlines of the adjacent teeth (5) are offset from each other by a distance of from 10% to 90% of the pitch length (P), and reinforcing the outer surface of the teeth (4) with a fabric layer (7) having woven warp (10) and weft (11) yarns, the method **characterized by**
providing a bi-directional stretch fabric for the fabric layer (7).

17. A method of forming a synchronous drive belt (1) according to claim 16 wherein the bi-directional stretch fabric (7) has a two-way scaffold construction.

18. A method of forming a synchronous drive belt (1) according to claim 16 further comprising the preparation step of dipping the fabric layer (7) in a resorcinol-formaldyhde-latex without stretching of the fabric layer (7).

## Patentansprüche

1. Antriebsriemen (1), der wenigstens eine Reihe von in Querrichtung verlaufenden Zähnen (5) und eine die Außenfläche (4) der Zähne verstärkende Gewebeschicht (7) enthält, wobei der Riemen (1) **dadurch gekennzeichnet ist, dass**:
das Gewebe (7) ein gewebtes, in zwei Richtungen dehnbares Gewebe (7) ist, das Kettgarne (10) und Schussgarne (11) enthält;
jedes Kettgarn (10) und jedes Schussgarn (11) ein erstes Kerngarn (12) enthält, um das wenigstens ein zweites Garn (13) gewickelt ist.

2. Antriebsriemen (1) nach Anspruch 1, wobei entweder das Kettgarn (10) oder das Schussgarn (11) ein weiteres, drittes Garn (14) enthält, das um das zweite Garn (13) und das Kerngarn (12) gewickelt ist.

3. Antriebsriemen (1) nach Anspruch 2, wobei das dritte Garn (14) in einer dem zweiten Garn (13) entgegengesetzten Richtung um das zweite Garn (13) gewickelt ist.

4. Antriebsriemen (1) nach Anspruch 1, wobei der Elastizitätsmodul des Kerngarns (12) größer als der Elastizitätsmodul des zweiten Garns (13) ist.

5. Antriebsriemen (1) nach Anspruch 2, wobei der Elastizitätsmodul des ersten Kerngarns. (12) größer als der Elastizitätsmodul des dritten Garns (14) ist.

6. Antriebsriemen (1) nach Anspruch 1, wobei der Elastizitätsmodul des ersten Kerngarns (12) größer als der Elastizitätsmodul des zweiten Garns (13) oder des dritten Garns (14) ist.

7. Antriebsriemen ( 1 ) nach Anspruch 1, wobei der Riemen (1) eine Sperrschicht (15) enthält, die an die Gewebeschicht (7) angrenzt, wobei
die Sperrschicht (15) eine Elastomermischung ist und eine höhere Vulkanisiergeschwindigkeit als jedes andere Elastomer in dem Riemen (1) besitzt.

8. Antriebsriemen (1) nach Anspruch 7, wobei die Sperrschicht (15) einen 10-%-Elastizitätsmodul im Bereich von 3,8 bis 6,6 MPa (550 bis 950 psi) aufweist.

9. Antriebsriemen (1) nach Anspruch 1, wobei die Zähne (5) an der Außenfläche des Riemens (1) in Längsrichtung (L) des Riemens (1) schräg verlaufen.

10. Antriebszahnriemen (1), der ein elastisches Elastomer enthält, das mit einem oder mehreren Verstärkungselementen (6) verstärkt ist, die sich entlang einer Teilungslinie erstrecken und diese dadurch definieren, wobei die Mittelinien von wenigstens zwei in Querrichtung benachbarten Reihen von Zähnen (5) in Längsrichtung (L) um ihre Teilungslänge (P) gleichmäßig beabstandet sind und zur-Längsrichtung (L) schräg verlaufen, derart, dass die Zähne (5) in den in Querrichtung benachbarten Reihen unter entgegengesetzt gleichen Winkeln angeordnet sind und die Mittellinien der benachbarten Zähne (5) um einen Abstand im Bereich von 10 % bis 90 % der Teilungslänge P gegeneinander versetzt sind, und mit einer Gewebeschicht (7) mit gewebten Kettgarnen (10) und Schussgarnen (11), die die Außenfläche (4) der Zähne verstärkt, wobei der Riemen (1) **dadurch gekennzeichnet ist, dass**
die Gewebeschicht (7) ein in zwei Richtungen dehnbares gewebtes Gewebe (7) ist.

11. Antriebszahnriemen (1) nach Anspruch 10, wobei das in zwei Richtungen dehnbare gewebte Gewebe (7) eine Zweiwege-Gerüstkonstruktion ist.

12. Antriebszahnriemen (1) nach Anspruch 10, wobei die Garne (12, 13 oder 14) des Gewebes (7) aus der Gruppe gewählt sind, die aus Nylon, Nylon-Rayon-Mischung, Aramid, Aramid-Rayon-Mischung, A-ramid-Nomex, Acryl, Acryl-Rayon-Mischung, Polyester, Baumwolle-Polyester-Mischung, Rayon, Baumwolle und Baumwolle-Rayon-Mischung besteht.

13. Verfahren zum Herstellen eines Antriebsriemens (1) für industrielle Anwendung, umfassend: Vorsehen eines Körpers des Riemens (1) aus einem elastischen Elastomer, Bilden wenigstens einer Reihe von in Querrichtung verlaufenden Zähnen (5) und Verstärken der Zähne (5) mit einem Abriebgewebe (7), wobei das Verfahren **gekennzeichnet ist durch**:
Formen des Abriebgewebes (7) aus einem in zwei Richtungen dehnbaren gewebten Gewebe (7), das Schussgarne (11) und Kettgarne (10) enthält, wobei jedes Kettgarn (10) und jedes Schussgarn (11) ein erstes Kerngarn (12) enthält, um das wenigstens ein zweites Garn (13) gewickelt ist.

14. Verfahren zum Herstellen eines Antriebsriemens (1) nach Anspruch 13, wobei entweder das Schussgarn (11) oder das Kettgarn (10) ein weiteres, drittes Garn (14) enthält, das um das zweite Garn (13) gewickelt ist.

15. Verfahren zum Herstellen eines Antriebsriemens (1) nach Anspruch 14, wobei das Kerngarn (12) des Schussgarns (11) und des Kettgarns (10) einen Elastizitätsmodul aufweist, der größer als der Elastizitätsmodul der zweiten und dritten Garne (13 oder 14) ist.

16. Verfahren zum Herstellen eines Antriebszahnriemens (1), umfassend: Vorsehen eines elastischen Elastomers, das mit einem oder mehreren Verstärkungselementen (6) verstärkt ist, die sich entlang einer Teilungslinie erstrecken und diese dadurch definieren, wobei die Mittellinien von wenigstens zwei in Querrichtung benachbarten Reihen von Zähnen (5) in Längsrichtung (L) um ihre Teilungslänge (P) gleichmäßig beabstandet sind und zur Längsrichtung (L) schräg verlaufen, derart, dass die Zähne (5) in den in Querrichtung benachbarten Reihen unter entgegengesetzt gleichen Winkeln angeordnet sind und die Mittellinien der benachbarten Zähne (5) um einen Abstand im Bereich von 10 % bis 90 % der Teilungslänge P gegeneinander versetzt sind, und Verstärken der Außenfläche (4) der Zähne mit einer Gewebeschicht (7) mit gewebten Kettgarnen (10) und Schussgarnen (11), wobei das Verfahren **gekennzeichnet ist durch**
Vorsehen eines in zwei Richtungen dehnbaren Gewebes für die Gewebeschicht (7).

17. Verfahren zum Herstellen eines Antriebszahnriemens (1) nach Anspruch 16, wobei das in zwei Richtungen dehnbare Gewebe (7) eine Zweiwege-Gerüstkonstruktion aufweist.

18. Verfahren zum Herstellen eines Antriebszahnriemens (1) nach Anspruch 16, das ferner den Fertigungsschritt umfasst, in dem die Gewebeschicht (7) in Resorcin-Formaldehyd-Latex getaucht wird, ohne die Gewebeschicht (7) zu dehnen.

## Revendications

1. Courroie de transmission (1), la courroie comprenant au moins une rangée de dents s'étendant en direction transversale (5) et une couche de tissu (7) renforçant la surface externe des dents (4), la courroie (1) étant **caractérisée par le fait que** :
le tissu (7) est une étoffe extensible bidirectionnelle tissée (7) comprenant un fil de chaîne (10) et un fil de trame (11) ;
chaque fil de chaîne (10) et chaque fil de trame (11) comprenant un premier fil central (12), au moins un deuxième fil (13) étant enroulé autour du fil central (12).

2. Courroie de transmission (1) selon la revendication 1, dans laquelle soit le fil de chaîne (10), soit le fil de trame (11) comprend un troisième fil supplémentaire (14) enroulé autour du deuxième fil (13) et du fil central (12).

3. Courroie de transmission (1) selon revendication 2, dans laquelle le troisième fil (14) est enroulé autour du deuxième fil (13) dans la direction opposée à celle du deuxième fil (13).

4. Courroie de transmission (1) selon revendication 1, dans laquelle le module d'élasticité du premier fil central (12) est supérieur au module d'élasticité du deuxième film (13).

5. Courroie de transmission (1) selon revendication 2, dans laquelle le module d'élasticité du premier fil central (12) est supérieur au module d'élasticité du troisième film (14).

6. Courroie de transmission (1) selon revendication 1, dans laquelle le module d'élasticité du premier fil central (12) est supérieur au module d'élasticité du deuxième film (13) ou du troisième fil (14).

7. Courroie de transmission (1) selon revendication 1, dans laquelle la courroie (1) comprend une couche d'arrêt (15) située en position adjacente à la couche de tissu (7), dans laquelle
la couche d'arrêt (15) représente un composé élastomère et possède une vitesse de vulcanisation supérieure à celle de l'autre élastomère dans la courroie (1).

8. Courroie de transmission (1) selon revendication 7, dans laquelle la couche d'arrêt (15) possède un module d'élasticité à 10 % de 3,8 - 6,6 MPa (550 - 950 psi).

9. Courroie de transmission (1) selon revendication 1, dans laquelle les dents (5) sur la surface externe de la courroie (1) s'étendent en oblique dans la direction longitudinale (L) de la courroie (1).

10. Courroie de transmission synchrone (1) comprenant un élastomère résilient renforcé avec un ou plusieurs membres de renforcement (6) s'étendant en définissant une ligne de pas, au moins deux rangées adjacentes de dents en direction transversale (5) possédant des lignes médianes équidistantes en direction longitudinale (L), la distance correspondant à leur longueur de pas (P), et s'étendant en oblique par rapport à la direction longitudinale, de telle sorte que les dents (5) dans les rangées adjacentes en direction transversale forment des angles antagonistes équilibrés et les lignes médianes des dents adjacentes (5) sont décalées l'une de l'autre sur une distance qui représente de 10 % à 90 % de la longueur de pas, une couche de tissu (7) possédant des fils tissés de chaîne (10) et de trame (11) renforçant la surface externe des dents (4), la courroie (1) étant **caractérisée par le fait que** la couche de tissu (7) est une étoffe extensible bidirectionnelle tissée (7).

11. Courroie de transmission synchrone (1) selon la revendication 10, dans laquelle l'étoffe extensible bidirectionnelle tissée (7) possède une construction à double sens qui rappelle celle d'un échafaudage.

12. Courroie de transmission synchrone (1) selon la revendication (10) dans laquelle les fils (12, 13 ou 14) du tissu (7) sont choisis parmi le groupe constitué par le nylon, un mélange de nylon - rayonne, de l'aramide, un mélange d'aramide - rayonne, de l'aramide - nomex, de l'acrylique, un mélange d'acrylique - rayonne, du polyester, un mélange de coton - polyester, de la rayonne, du coton et un mélange de coton - rayonne.

13. Procédé de construction d'une courroie de transmission (1) pour des applications industrielles comprenant le fait de procurer un corps de courroie élastomère résilient (1), le fait de former au moins une rangée de dents s'étendant en direction transversale (5) et le fait de renforcer les dents (5) avec un tissu (7) résistant à l'abrasion, le procédé étant **caractérisé par** le fait de :
confectionner le tissu (7) résistant à l'abrasion à partir d'une étoffe extensible bidirectionnelle tissée (7) comprenant des fils de trame (11) et de chaîne (10), chaque fil de chaîne (10) et de trame (11) comprenant un premier fil central (12), au moins un deuxième fil (13) étant enroulé autour du fil central (12).

14. Procédé de construction d'une courroie de transmission (1) selon la revendication 13, dans lequel soit le fil de trame (11), soit le fil de chaîne (10) comprend un troisième fil supplémentaire (14) enroulé autour du deuxième fil (13).

15. Procédé de construction d'une courroie de transmission (1) selon la revendication 14, dans lequel le fil central (12) des fils de trame (11) et des fils de chaîne (10) possède un module d'élasticité supérieur au module d'élasticité des deuxième et troisième fils (13 ou 14).

16. Procédé de construction d'une courroie de transmission (1) comprenant le fait de procurer un corps de courroie élastomère résilient (1) renforcé avec un ou plusieurs membres de renforcement (6) s'étendant en définissant une ligne de pas, au moins deux rangées adjacentes de dents en direction transversale (5) possédant des ligne médianes équidistantes en direction longitudinale (L), la distance correspondant à leur longueur de pas (P), et s'étendant en oblique par rapport à la direction longitudinale, de telle sorte que les dents (5) dans les rangées adjacentes en direction transversale forment des angles antagonistes équilibrés et les lignes médianes des dents adjacentes (5) sont décalées l'une de l'autre sur une distance qui représente de 10 % à 90 % de la longueur de pas, et renforcer la surface externe des dents (4) avec une couche de tissu (7) possédant des fils tissés de chaîne (10) et de trame (11), le procédé étant **caractérisé par** le fait de
procurer une étoffe extensible bidirectionnelle pour la couche de tissu (7).

17. Procédé de construction d'une courroie de transmission (1) selon la revendication 16, dans lequel l'étoffe extensible bidirectionnelle (7) possède une construction à double sens qui rappelle celle d'un échafaudage.

18. Procédé de construction d'une courroie de transmission (1) selon la revendication 16, comprenant en outre l'étape de préparation consistant à plonger la couche de tissu (7) dans un latex de résorcinol-formaldéhyde sans soumettre la couche de tissu (7) à une extension.
